# EUROPÄISCHE PATENTSCHRIFT

(11) **EP 3 542 323 B1**
(45) Veröffentlichungstag und Bekanntmachung des Hinweises auf die Patenterteilung: **13.05.2026**
(21) Anmeldenummer: 17771474.8
(22) Anmeldetag: 27.09.2017
(51) Int. Cl.: G06Q 10/047, G06Q 10/083, G06Q 10/0834, G06Q 50/40

(54) **SYSTEM UND EIN VERFAHREN ZUM ENERGIESPARENDEN TRANSPORTIEREN VON GEGENSTÄNDEN**
SYSTEM AND METHOD FOR THE ENERGY-SAVING TRANSPORTATION OF ITEMS
SYSTEME ET PROCEDE POUR LE TRANSPORT ECONOME EN ENERGIE D'OBJETS

(30) Priorität: 16.11.2016 LU 93310
(43) Veröffentlichungstag der Anmeldung: 25.09.2019
(73) Patentinhaber: Sendbyfriend GmbH, 65558 Eppenrod (DE)
(72) Erfinder: SCHLOSSER-SCHRAMM, Konstanze, "verstorben" (DE)
(74) Vertreter: Hoffmann, Jürgen
(86) Internationale Anmeldenummer: PCT/EP2017/074464
(87) Internationale Veröffentlichungsnummer: WO 2018/091185

(56) Entgegenhaltungen:
- ANONYMOUS: "Eco-friendly shipping by travelers | Crowdsourced delivery", 3 March 2015 (2015-03-03), pages 1 - 1, XP093246759, Retrieved from the Internet <URL:https://web.archive.org/web/20150303152930/http://www.piggybee.com/Home/FAQ> [retrieved on 20250205]
- ANONYMOUS: "Eco-friendly shipping by travelers | Crowdsourced delivery", 26 February 2015 (2015-02-26), pages 1 - 2, XP093246701, Retrieved from the Internet <URL:https://web.archive.org/web/20150226180539/http://www.piggybee.com/Home/Index/1> [retrieved on 20250205]
- ANONYMOUS: "Missiontag", 25 April 2015 (2015-04-25), pages 1 - 7, XP055355872, Retrieved from the Internet <URL:http://web.archive.org/web/20150425035505/http://www.missiontag.de/faq.php> [retrieved on 20170317]
- ANONYMOUS: "Missiontag", 15 April 2016 (2016-04-15), pages 1 - 1, XP055355879, Retrieved from the Internet <URL:http://web.archive.org/web/20160415233116/http://www.missiontag.de/login.php> [retrieved on 20170317]

## Beschreibung

Die Erfindung betrifft ein System und ein Verfahren zum energiesparenden Transportieren von Gegenständen.

Das Versenden eines Gegenstandes an einen bestimmten Zielort wird in aller Regel dadurch bewerkstelligt, dass der Gegenstand einem Transportunternehmen übergeben wird. Das Transportunternehmen bringt den Gegenstand dann entweder direkt oder über Zwischenstationen zum Zielort, wobei die zum Transport erforderlichen Transportmittel, wie Fahrzeuge und Sortiereinrichtungen, ausschließlich für diesen Zweck betrieben werden. Insoweit wird die zum Betreiben der Transportmittel erforderliche Energie ausschließlich dafür aufgewendet, den Transport von Gegenständen zu bewerkstelligen. Aus einem anderen Blickwinkel betrachtet stellt sich die Situation wie folgt dar: Täglich bewegen sich viele Fahrzeuge, von denen ein Teil mit einem erheblichen Energieaufwand ausschließlich zu dem Zweck betrieben wird, Gegenstände zu transportieren.

Es ist auch bekannt, wenigstens zum Teil auf gewerbliche Paketdienste zu verzichten, indem Privatpersonen als Gelegenheitsboten fungieren und beispielsweise auf ihrem Weg zur Arbeit noch schnell ein Paket ausliefern. Die Sendungen werden dabei zuvor in stationären Umschlagplätzen abgegeben und dort von den Privatpersonen dann zur Zustellung abgeholt. Eine solche Vorgehensweise ist als sog. Crowdshipping bekannt.

Aus DE 10 2011 084 282 A1 ist beispielsweise ein Verfahren zum Zustellen einer Postsendung zu einer Zieladresse bekannt, wobei die Postsendung an einem Stützpunkt einer Mehrzahl von Stützpunkten bereitgestellt wird. Bei dem Verfahren wird ein erster Teilnehmer eines Dienstes aus einer Mehrzahl von für den Dienst registrierten Teilnehmern aufgrund einer Zuordnung des Teilnehmers zu dem Stützpunkt ausgewählt, eine Anfrage an den ausgewählten ersten Teilnehmer gesendet und eine auf die Anfrage gesendete Annahmenachricht des Teilnehmers empfangen und die Postsendung aufgrund des Empfangs der Annahmenachricht für den Transport auf wenigstens einem Teilstück einer Sendungsroute zu der Zieladresse an dem Stützpunkt an den ersten Teilnehmer übergeben.

Crowdshipping hat den Nachteil, dass in energieaufwändiger Weise genauso wie bei einer Zustellung durch einen Zustelldienst zusätzliche Wege zurückgelegt werden müssen, beispielsweise um das zuzustellende Paket von einer Umschlagstation für den Weitertransport abzuholen. Außerdem ist es technisch aufwändig, die erforderlichen Routen- und Zeitinformationen, beispielsweise über Reise-, Arbeits- oder Einkaufswege unterschiedlicher Personen, zu sammeln und zum Ermitteln von möglichen Übergabeorten und Zeitpunkten auszuwerten.

Aus der Internetveröffentlichung http://www.missiontag.de ist ein Gesellschaftsspiel bekannt, bei dem mit einem Missions-Anhängeschild versehene Gegenstände von Teilnehmer zu Teilnehmer weitergegeben werden, darüber ein Internet-Logbuch geführt wird und bei dem es darauf ankommt, dass die Gegenstände ohne geplante Route zufällig an andere Personen weitergegeben werden. Die Routen der Gegenstände können danach über die Ortsinformation in den Logs eingesehen werden.

Aus der Internetveröffentlichung www.PiggyBee.com ist eine auf dem Prinzip der kollaborativen Lieferung basierendes System bekannt. Die Plattform bringt Reisende, die bereit sind, Gegenstände auf ihren Reisen zu transportieren, mit Personen zusammen, die einen solchen Transportbedarf haben. Nutzer, die einen Gegenstand versenden möchten, geben auf der Plattform an, was, wann und wohin transportiert werden soll. Reisende können daraufhin entsprechende Transportangebote machen.

Es ist daher die Aufgabe der vorliegenden Erfindung, ein System anzugeben, das ein energiesparendes Transportieren von Gegenständen ermöglicht.

Die Aufgabe wird durch ein System gelöst, das gekennzeichnet ist durch:
a. eine Vielzahl von Kommunikationsmodulen, wobei jedes Kommunikationsmodul eindeutig wenigstens einer Person einer Vielzahl von Personen zugeordnet ist und wobei jedes Kommunikationsmodul zum Eingeben wenigstens einer Begegnungsinformation über eine künftige Begegnung wenigstens zweier der Vielzahl von Personen ausgebildet und eingerichtet ist,
b. ein von den Kommunikationsmodulen räumlich entferntes Speichermodul, in dem die mittels der Kommunikationsmodule eingegebenen Begegnungsinformationen abgelegt sind,
c. wenigstens ein Transportanfragemodul, in das eine Transportanfrage, die wenigstens Informationen über einen Versender und einen Transportempfänger beinhaltet, von einem Versender eingebbar ist, und das die eingegebene Transportanfrage versendet, und
d. ein von dem Transportanfragemodul entferntes Berechnungsmodul, das die Transportanfrage von dem Kommunikationsmodul empfängt und das unter Berücksichtigung der Information über den Versender und den Transportempfänger aus den gespeicherten Begegnungsinformationen eine Reihenfolge unterschiedlicher Personen ermittelt, wobei unmittelbar für in der Reihenfolge aufeinanderfolgende Personen eine Begegnungsinformationen vorhanden ist und wobei der Versender die erste Person in der Reihenfolge ist und wobei der Transportempfänger die letzte Person in der Reihenfolge ist, und wobei das Berechnungsmodul (5) jeweils an die Kommunikationsmodule (2) der in der Reihenfolge jeweils unmittelbar aufeinanderfolgenden Personen wenigstens eine Übergabeinformation übersendet, und
e. der Transport des Gegenstandes in der Weise durchführbar ist, dass der Versender den Gegenstand der zweiten Person der ermittelten Reihenfolge bei einer ohnehin anstehenden Begegnung übergibt und dass die zweite Person den Gegenstand bei einer ohnehin anstehenden Begegnung der dritten Person der ermittelten Reihenfolge übergibt und so fort, bis der Gegenstand den Transportempfänger erreicht hat.

Es ist eine weitere Aufgabe der vorliegenden Erfindung, ein Verfahren anzugeben, das ein energiesparendes Transportieren von Gegenständen ermöglicht.

Diese Aufgabe wird durch ein Verfahren gelöst, das durch folgende Schritte gekennzeichnet ist:
a. Eingeben von Begegnungsinformation über die künftigen Begegnungen von jeweils mindestens zweien einer Vielzahl von Personen in einem Speichermodul, wobei das Eingeben von jeder der Personen über ein ihr zugeordnetes Kommunikationsmodul erfolgt,
b. Übertragen der Begegnungsinformationen an ein von den Kommunikationsmodulen räumlich entferntes Speichermodul, in dem die mittels der Kommunikationsmodule eingegebenen Begegnungsinformationen abgelegt werden,
c. Eingeben einer Transportanfrage, die wenigstens Informationen über einen Versender und einen Transportempfänger beinhaltet, in ein Transportanfragemodul, das die eingegebene Transportanfrage versendet, und
d. Ermitteln einer Reihenfolge unterschiedlicher Personen unter Berücksichtigung der Information über den Versender und den Transportempfänger aus den gespeicherten Begegnungsinformationen mittels eines von dem Transportanfragemodul entfernten Berechnungsmoduls, wobei unmittelbar für in der Reihenfolge aufeinanderfolgende Personen eine Begegnungsinformationen vorhanden ist und wobei der Versender die erste Person in der Reihenfolge ist und wobei der Transportempfänger die letzte Person in der Reihenfolge ist, wobei jeweils an in der Reihenfolge jeweils unmittelbar aufeinanderfolgenden Personen und/oder an die Kommunikationsmodule (2) der in der Reihenfolge jeweils unmittelbar aufeinanderfolgenden Personen wenigstens eine Übergabeinformation übersendet wird, und
e. Durchführen des Transports des Gegenstandes in der Weise, dass der Versender den Gegenstand der zweiten Person der ermittelten Reihenfolge bei einer ohnehin anstehenden Begegnung übergibt und dass die zweite Person den Gegenstand bei einer ohnehin anstehenden Begegnung der dritten Person der ermittelten Reihenfolge übergibt und so fort, bis der Gegenstand den Transportempfänger erreicht hat.

Ein wesentlicher Erfindungsgedanke der vorliegenden Erfindung ist darin begründet, den Energiebedarf für den Transport von Gegenständen dadurch zu senken, dass keine Begegnungen erforderlich sind, die ausschließlich zum Zweck des Transports, insbesondere zur Übergabe des zu transportierenden Gegenstandes vereinbart und durchgeführt werden müssen. Derartige Begegnungen erfordern es insbesondere, zusätzliche Wege zurückzulegen, um einen zuvor ausschließlich zum Zweck des Transport vereinbarten Übergabeort oder einen Umschlagplatz aufzusuchen. Ein gravierender Nachteil des Crowdshippings, nämlich dass Energie in erheblichem Umfang ausschließlich für den Transport verbraucht wird, weil die transportierenden Personen Umwege und Extrawege zurücklegen müssen, wird durch die vorliegende Erfindung vermieden.

Ein weitere wesentlicher Erfindungsgedanke der vorliegenden Erfindung ist darin begründet, den Energiebedarf des technischen Gesamtsystems aller Fahrzeuge dadurch zu reduzieren, dass Gegenstände auf geschickte Weise parasitär mit den Transportmitteln derjenigen Personen transportiert werden, die sich ohnehin begegnen werden. Die Erfindung hat daher den ganz besonderen Vorteil, dass der Ressourcenverbrauch, insbesondere der Energiebedarf, für den Transport von Gegenständen ganz erheblich reduziert ist. Insoweit reduziert sich der Energiebedarf des technischen Gesamtsystems aller Fahrzeuge beispielsweise eines Landes oder einer Region ganz erheblich.

Die Erfindung hat den weiteren Vorteil, dass sich die transportierenden Personen, zumindest die in der ermittelten Reihenfolge unmittelbar aufeinanderfolgenden Personen, persönlich kennen, was den Transport besonders sicher und zuverlässig und angenehm macht.

Darüber hinaus ist es vorteilhaft nicht erforderlich, eine künstliche Begegnung ausschließlich zum Zwecke der Übergabe eines Gegenstandes zu vereinbaren und durchzuführen. Insbesondere ist es nicht erforderlich, eine künstliche Begegnung mit fremden Personen ausschließlich zum Zwecke der Übergabe eines Gegenstandes zu vereinbaren und durchzuführen.

Das System ist umso wirkungsvoller und die Einsparung umso größer, je mehr Personen Begegnungsinformationen, insbesondere über ein ihr zugeordnetes Kommunikationsmodul, eingeben und zur Abspeicherung und Auswertung übersenden. Hierbei ist es im Hinblick auf die Komplexität der abzuspeichernden Informationen besonders vorteilhaft, dass es ausreicht, wenn eine Begegnungsinformation nur Angaben darüber enthält, wer die an der künftigen Begegnung beteiligten Personen sind. In vorteilhafter Weise ist es nicht erforderlich - aber dennoch durchaus möglich -, dass die Begegnungsinformation Angaben über Zeit und/oder Ort der künftigen Begegnung beinhaltet.

Der Transport des Gegenstandes erfolgt in der Weise, dass der Versender den Gegenstand der zweiten Person der ermittelten Reihenfolge bei einer ohnehin anstehenden Begegnung übergibt. Diese übergibt den Gegenstand bei einer ohnehin anstehenden Begegnung der dritten Person der ermittelten Reihenfolge und so fort, bis der Gegenstand den Transportempfänger erreicht hat. Insbesondere kann die Reihenfolge mehr als zwei Personen, insbesondere mehr als drei Personen beinhalten. Insbesondere kann vorteilhaft auch vorgesehen sein, dass mehr als eine Übergabe, insbesondere mehr als zwei Übergaben, erfolgen, bevor der Gegenstand den Transportempfänger erreicht. Auf diese Weise ist vorteilhaft erreicht, dass auch ein Versenden an weit entfernte Personen möglich ist.

Eine Angabe über den Ort ist nicht erforderlich, weil es für den beschriebenen Transport des Gegenstandes nicht relevant ist, wo der Gegenstand jeweils übergeben wird.

Ebenso ist eine Angabe über die Zeitpunkte der Begegnungen nicht grundsätzlich erforderlich, um den Transport durchführen zu können. Allerdings ist es von Vorteil, wenn die Begegnungsinformation Angaben über den Zeitpunkt der Begegnung der wenigstens zwei Personen beinhaltet, weil anhand der Zeitpunkte die Transportdauer im Voraus, insbesondere für mehrere alternative Reihenfolgen von Personen, ermittelt werden kann.

Insbesondere hierzu kann beispielsweise auch vorgesehen sein, dass die Begegnungsinformation Angaben über eine Regelmäßigkeit künftiger Begegnungen der wenigstens zwei Personen beinhaltet. Ein Detail betreffend die Regelmäßigkeit kann beispielsweise in der Information bestehen, in welchen Rhythmus, beispielsweise täglich, wöchentlich, monatlich oder beispielsweise an jedem 13.-ten und 21.-ten eines Monats, eine Begegnung stattfindet.

Das Eingeben einer Transportanfrage erfolgt über ein Transportanfragemodul. In besonders vorteilhafter Weise kann das Eingeben einer Transportanfrage über ein Transportanfragemodul erfolgen, das eines der Kommunikationsmodule der Vielzahl von Kommunikationsmodulen ist. Es kann vorteilhaft insbesondere vorgesehen sein, dass jedes der Kommunikationsmodule auch zum Eingeben von Transportanfragen ausgebildet ist.

Beispielsweise können das Kommunikationsmodul und/oder das Transportanfragemodul als PC oder ein Smartphone oder ein Tablet-PC ausgebildet sein oder ein solches Gerät beinhalten. Es kann vorteilhaft insbesondere vorgesehen sein, dass Teile der Begegnungsinformation, wie eine Telefonnummer oder eine Adresse, als zusätzliche Information - insbesondere automatisch - zu den auf dem Kommunikationsmodul gespeicherten persönlichen Kontakten hinzugefügt wird.

Bei einer vorteilhaften Ausführung ist über das Transportanfragemodul zusätzlich wenigstens ein Transportparameter eingebbar, der von dem Berechnungsmodul bei der Ermittlung der Reihenfolge berücksichtigt wird.

Insbesondere kann vorteilhaft vorgesehen sein, dass das Berechnungsmodul mehrere alternative Reihenfolgen, die durch unterschiedliche Transportparameter gekennzeichnet sind, ermittelt. Der Versender kann sich dann für eine der ihm angezeigten, möglichen Abfolgen entscheiden.

Beispielsweise kann ein Transportparameter das Ermitteln der Reihenfolge für den schnellsten Transport betreffen. Es ist beispielsweise auch möglich, dass ein Transportparameter das Ermitteln der Reihenfolge für den sichersten Transport oder das Ermitteln der Reihenfolge mit den Personen betrifft, für die die besten Bewertungen durch andere Personen abgegeben wurden, oder das Ermitteln der Reihenfolge mit der geringsten Anzahl von Personen betrifft.

Bei einer vorteilhaften Ausführung ermittelt das Berechnungsmodul für die ermittelte Reihenfolge eine Transportdauer für den Transport vom Transportstartort zum Transportziel und teilt diese dem Versender vorzugsweise dadurch mit, dass diese an das Transportanfragemodul übermittelt wird.

Bei einer ganz besonders vorteilhaften Ausführung berücksichtigt das Berechnungsmodul bei dem Ermitteln den aktuellen Aufenthaltsort der Personen. Dies kann beispielsweise dadurch erfolgen, dass ausgewertet wird, in welchen Mobilfunkzellen eines Mobilfunknetzwerks die Kommunikationsmodule der Personen und/oder separate Mobiltelefone der Personen jeweils gerade registriert sind. Auf diese Weise kann beispielsweise abgeglichen werden, ob die in dem Speichermodul hinterlegten Begegnungsinformationen plausibel und/oder für einen aktuell durchzuführenden Transport sinnvoll verwendbar sind. Beispielsweise kann so herausgefunden werden, dass eine künftige Begegnung für einen Transport von einem Versender in Deutschland an einen Transportempfänger in Deutschland nicht zeitnah stattfinden kann, wenn eine der Personen der ermittelten Reihenfolge sich gerade in Australien aufhält.

Es ist auch möglich, dass die Abfolge für einen Transport geändert wird, wenn, beispielsweise auf Grund der Ermittlung der aktuellen Aufenthaltsorte der für einen Transport vorgesehenen Personen, festgestellt wird, dass ein Transport, beispielsweise durch die Krankheit einer Person, nicht ungestört möglich ist.

Nachdem das Berechnungsmodul eine Reihenfolge von Personen ermittelt hat, teilt es diese dem Versender vorzugsweise mit; dies vorzugsweise, indem eine entsprechende Information an das Transportanfragemodul übermittelt wird. Darüber hinaus teilt das Berechnungsmodul dem Versender vorzugsweise die Identitäten der Personen der Reihenfolge mit. Dies ermöglicht es dem Versender, bei den Personen jeweils nachzufragen, ob sie den Gegenstand bereits erhalten haben oder ob sie den Gegenstand bereits weiter gegeben haben.

Darüber hinaus kann vorteilhaft vorgesehen sein, dass das Berechnungsmodul an die Personen der Reihenfolge und/oder an die Kommunikationsmodule der Personen der Reihenfolge wenigstens eine Transportinformation übermittelt. Die Transportinformation kann insbesondere eine Information darüber beinhalten, dass ein Transport mit einer bestimmten Reihenfolge von Personen verbindlich vom Versender gebucht wurde.

Bei einer besonderen Ausführung ordnet das Berechnungsmodul den Personen der Reihenfolge wenigstens eine Gegenstandsinformation über den zu transportierenden Gegenstand zu. Hierbei kann es sich insbesondere um einen eindeutigen Identifikationscode und/oder um Informationen über Art und Größe des zu transportierenden Gegenstandes handeln.

Bei einer besonders vorteilhaften Ausführung ermittelt das Berechnungsmodul die Reihenfolge wenigsten teilweise nach einem Dijkstra Algorithmus.

Bei einer weiteren, besonderen Ausführung beinhaltet die Begegnungsinformation zusätzlich eine Information über eine maximale Übergabe- und Transportkapazität, beispielsweise in Form von Angaben über die maximal möglichen Abmessungen und/oder das maximal mögliche Gewicht des zu transportierenden Gegenstands. Dies hat den besonderen Vorteil, dass das Berechnungsmodul für einen bestimmten Transport, beispielsweise für den Transport eines besonders großen und schweren Gegenstands, ausschließlich die geeigneten Personen beim Ermitteln der Reihenfolge berücksichtigt.

In der Zeichnung ist der Erfindungsgegenstand beispielhaft und schematisch dargestellt und wird anhand der Figuren nachfolgend beschrieben, wobei gleiche oder gleich wirkende Elemente auch in unterschiedlichen Ausführungsbeispielen zumeist mit denselben Bezugszeichen versehen sind. Dabei zeigen:
- Fig. 1: schematisch und beispielhaft ein Ausführungsbeispiel eines erfindungsgemäßen Systems zum energiesparenden Transportieren von Gegenständen, und
- Fig. 2: eine schematische Illustration der Funktionsweise des erfindungsgemäßen Systems zum Energiesparen und Transportieren von Gegenständen,

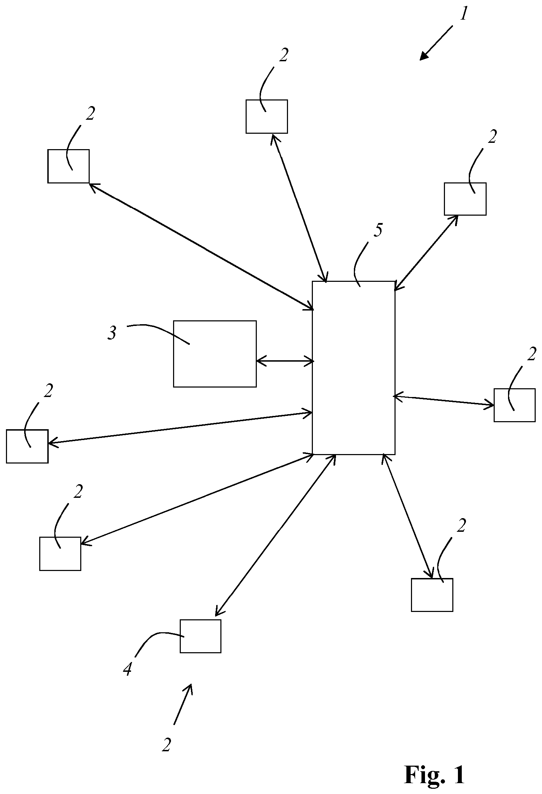

Figur 1 zeigt schematisch und beispielhaft ein System 1 zum energiesparenden Transportieren von Gegenständen. Das System beinhaltet eine Vielzahl von Kommunikationsmodulen 2, wobei jedes Kommunikationsmodul 2 eindeutig wenigstens einer Person einer Vielzahl von Personen zugeordnet ist und wobei jedes Kommunikationsmodul 2 zum Eingeben wenigstens einer Begegnungsinformation über eine künftige Begegnung wenigstens zweier der Vielzahl von Personen ausgebildet und eingerichtet ist.

Darüber hinaus weist das System 1 ein von den Kommunikationsmodulen 2 räumlich entferntes Speichermodul 3 auf, in dem die mittels der Kommunikationsmodule 2 eingegebenen Begegnungsinformationen über eine künftige Begegnung wenigstens zweier der Vielzahl von Personen abgelegt werden.

Das System beinhaltet außerdem ein Transportanfragemodul 4, das ebenfalls als Kommunikationsmodul 2 ausgebildet sein kann. Das Transportanfragemodul 4 ist dazu ausgebildet und bestimmt, eine Transportanfrage einzugeben, die wenigstens eine Information über einen Versender und einen Transportempfänger beinhaltet. Das Transportanfragemodul 4 versendet die Transportanfrage an ein Berechnungsmodul 5. Das Berechnungsmodul 5 ermittelt unter Berücksichtigung des mitgeteilten Versenders und des mitgeteilten Transportempfängers aus den im Speichermodul gespeicherten Begegnungsinformation eine Reihenfolge von Personen, wobei unmittelbar für in der Reihenfolge aufeinanderfolgende Personen eine Begegnungsinformationen vorhanden ist und wobei der Versender die erste Person in der Reihenfolge ist und wobei der Transportempfänger die letzte Person in der Reihenfolge ist.

Auf diese Weise ist es ermöglicht, dass der Versender den zu transportierenden Gegenstand der zweiten Person der ermittelten Reihenfolge bei der ohnehin anstehenden Begegnung, für die eine Begegnungsinformation eingegeben und übermittelt wurde, übergibt.

Diese übergibt den Gegenstand bei einer ohnehin anstehenden Begegnung, für die ebenfalls eine Begegnungsinformation eingegeben und übermittelt wurde, der dritten Person der ermittelten Reihenfolge und so fort, bis der Gegenstand den Transportempfänger erreicht hat.

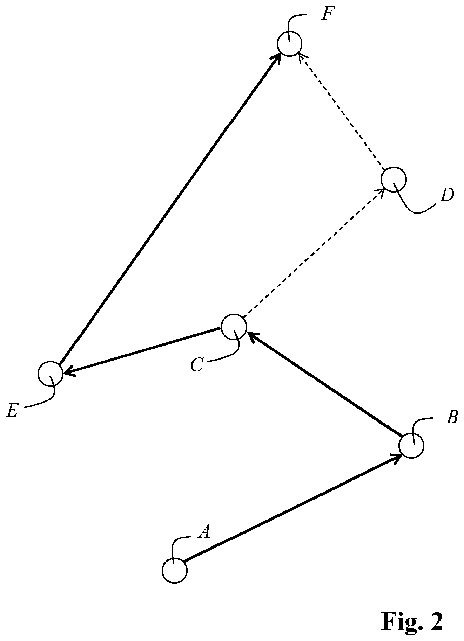

Figur 2 illustriert schematisch und beispielhaft die Funktionsweise des Systems zum energiesparenden Transportieren von Gegenständen.

Eine Person A hat über ihr Kommunikationsmodul 2 eingegeben, dass sie regelmäßig, beispielsweise täglich auf der Arbeit, eine Person B trifft.

Die Person B hat über ihr Kommunikationsmodul 2 eingegeben, dass sie stets dienstags und freitags Person C trifft.

Eine Person D und eine Person E haben jeweils über ihr Kommunikationsmodul 2 eingegeben, dass sie Person C treffen werden und dass Sie Person F treffen, wobei die Person D die Person F einmal monatlich trifft und die Person E täglich.

Hat Person A als Versender nun über sein Transportanfragemodul eine Transportanfrage eingegeben, die die Angabe beinhaltet, dass ein Gegenstand von der Person A zu der Person F als Transportempfänger transportiert werden soll, wobei zusätzlich als Transportparameter eingegeben wurde, dass möglichst schnell durchgeführt werden soll, so ermittelt das Berechnungsmodul 5 eine Reihenfolge von Personen, die in Figur 2 durch die fett gedruckten Pfeile dargestellt ist. Diese Reihenfolge beinhaltet die Personen A, B C, E und F.

Dieser Transport ist, da sich die Personen E und F täglich begegnen, schneller als der auch mögliche Transport (gestrichelt eingezeichnet) über Person D, mit der sich Person F nur monatlich trifft.

Das Berechnungsmodul 5 teilt diese Reihenfolge der Person A, dem Versender, mit. Der Versender wird dann den Gegenstand der Person B bei der nächsten anstehenden Begegnung übergeben. Person B übergibt den Gegenstand bei der nächsten anstehenden Begegnung an Person C, diese an Person E und diese schließlich an Person F.

### Bezugszeichenliste:

- 1: System
- 2: Kommunikationsmodule
- 3: Speichermodul
- 4: Transportanfragemodul
- 5: Berechnungsmodul
- A bis F: Personen

## Patentansprüche

1. System (1) zum energiesparenden Transportieren von Gegenständen, **gekennzeichnet durch**:
a. eine Vielzahl von Kommunikationsmodulen (2), wobei jedes Kommunikationsmodul (2) eindeutig wenigstens einer Person einer Vielzahl von Personen zugeordnet ist und wobei jedes Kommunikationsmodul (2) zum Eingeben wenigstens einer Begegnungsinformation über eine künftige Begegnung wenigstens zweier der Vielzahl von Personen ausgebildet und eingerichtet ist,
b. ein von den Kommunikationsmodulen (2) räumlich entferntes Speichermodul (3), in dem die mittels der Kommunikationsmodule (2) eingegebenen Begegnungsinformationen abgelegt sind,
c. wenigstens ein Transportanfragemodul (4), in das eine Transportanfrage, die wenigstens Informationen über einen Versender und einen Transportempfänger beinhaltet, von einem Versender eingebbar ist, und das die eingegebene Transportanfrage versendet,
d. ein von dem Transportanfragemodul (4) entferntes Berechnungsmodul (5), das die Transportanfrage von dem Kommunikationsmodul (2) empfängt und das unter Berücksichtigung der Information über den Versender und den Transportempfänger aus den gespeicherten Begegnungsinformationen eine Reihenfolge unterschiedlicher Personen ermittelt, wobei unmittelbar für in der Reihenfolge aufeinanderfolgende Personen eine Begegnungsinformation vorhanden ist und wobei der Versender die erste Person in der Reihenfolge ist und wobei der Transportempfänger die letzte Person in der Reihenfolge ist, und wobei das Berechnungsmodul (5) jeweils an die Kommunikationsmodule (2) der in der Reihenfolge jeweils unmittelbar aufeinanderfolgenden Personen wenigstens eine Übergabeinformation übersendet, und
e. der Transport des Gegenstandes in der Weise durchführbar ist, dass der Versender den Gegenstand der zweiten Person der ermittelten Reihenfolge bei einer ohnehin anstehenden Begegnung übergibt und dass die zweite Person den Gegenstand bei einer ohnehin anstehenden Begegnung der dritten Person der ermittelten Reihenfolge übergibt und so fort, bis der Gegenstand den Transportempfänger erreicht hat.

2. System (1) nach Anspruch 1, **dadurch gekennzeichnet, dass**
a. die Begegnungsinformation eine Information über den Zeitpunkt der Begegnung der wenigstens zwei Personen beinhaltet, und/oder dass
b. die Begegnungsinformation eine Information über eine Regelmäßigkeit künftiger Begegnungen der wenigstens zwei Personen beinhaltet, und/oder dass
c. die Begegnungsinformation keine Information über den Ort der Begegnung beinhaltet und/oder dass das System ohne Information über den Ort der Begegnungen betreibbar ist.

3. System (1) nach Anspruch 1 oder 2, **dadurch gekennzeichnet, dass**
a. das Transportanfragemodul (4) eines der Kommunikationsmodule (2) der Vielzahl von Kommunikationsmodulen (2) ist, und/oder dass
b. jedes der Kommunikationsmodule (2) auch zum Eingeben von Transportanfragen ausgebildet ist.

4. System (1) nach einem der Ansprüche 1 bis 3, **dadurch gekennzeichnet, dass**
a. über das Transportanfragemodul (2) wenigstens ein Transportparameter eingebbar ist und dass das Berechnungsmodul die Reihenfolge unter Berücksichtigung des Transportparameters ermittelt, und/oder dass
b. das Berechnungsmodul (5) mehrere alternative Reihenfolgen ermittelt und/oder dass das Berechnungsmodul (5) mehrere alternative Reihenfolgen, die durch unterschiedliche Transportparameter gekennzeichnet sind, ermittelt.

5. System (1) nach Anspruch 4, **dadurch gekennzeichnet, dass**
a. ein Transportparameter das Ermitteln der Reihenfolge für den schnellsten Transport betrifft und/oder dass
b. ein Transportparameter das Ermitteln der Reihenfolge für den sichersten Transport betrifft und/oder dass
c. ein Transportparameter das Ermitteln der Reihenfolge mit den Personen betrifft, für die die besten Bewertungen durch andere Personen abgegeben wurden, und/oder dass
d. ein Transportparameter das Ermitteln der Reihenfolge mit der geringsten Anzahl von Personen betrifft, und/oder dass
e. ein Transportparameter das Ermitteln der Reihenfolge mit Personen mit einer für den zu transportierenden Gegenstand geeigneten Übergabe- und Transportkapazität betrifft.

6. System (1) nach einem der Ansprüche 1 bis 5, **dadurch gekennzeichnet, dass**
a. das Berechnungsmodul (5) für die ermittelte Reihenfolge eine Transportdauer für den Transport vom Versender zum Transportempfänger ermittelt und die Transportdauer dem Versender mitteilt und/oder an das Transportanfragemodul (4) übermittelt, und/oder dass
b. das Berechnungsmodul (5) bei dem Ermitteln den aktuellen Aufenthaltsort der Personen der Vielzahl von Personen berücksichtigt, und/oder dass
c. das Berechnungsmodul (5) die ermittelte Reihenfolge dem Versender mitteilt und/oder an das Transportanfragemodul (4) übermittelt, und/oder dass
d. das Berechnungsmodul (5) die ermittelte Reihenfolge dem Versender mitteilt und/oder an das Transportanfragemodul (4) übermittelt und die Identitäten der Personen der ermittelten Reihenfolge dem Versender mitteilt und/oder an das Transportanfragemodul (4) übermittelt, und/oder dass
e. das Berechnungsmodul (5) der ermittelten Reihenfolge wenigstens eine Gegenstandsinformation über den zu transportierenden Gegenstand, die insbesondere einen Identifikationscode beinhaltet, zuordnet, und/oder dass
f. das Berechnungsmodul (5) im Falle einer Störung des Transportablaufs eine neue Reihenfolge ermittelt.

7. System (1) nach einem der Ansprüche 1 bis 6, **dadurch gekennzeichnet, dass** das Kommunikationsmodul (2) und/oder das Transportanfragemodul (4) ein PC oder ein Smartphone oder ein Tablet-PC ist oder dass das Kommunikationsmodul (2) und/oder das Transportanfragemodul (4) einen PC oder ein Smartphone oder einen Tablet-PC beinhaltet.

8. Verfahren zum energiesparenden Transportieren von Gegenständen, **gekennzeichnet durch** folgende Schritte:
a. Eingeben von Begegnungsinformation über die künftigen Begegnungen von jeweils mindestens zweien einer Vielzahl von Personen in einem Speichermodul, wobei das Eingeben von jeder der Personen über ein ihr zugeordnetes Kommunikationsmodul (2) erfolgt,
b. Übertragen der Begegnungsinformationen an ein von den Kommunikationsmodulen (2) räumlich entferntes Speichermodul (3), in dem die mittels der Kommunikationsmodule (2) eingegebenen Begegnungsinformationen abgelegt werden,
c. Eingeben einer Transportanfrage, die wenigstens Informationen über einen Versender und einen Transportempfänger beinhaltet, in ein Transportanfragemodul (4), das die eingegebene Transportanfrage versendet,
d. Ermitteln einer Reihenfolge unterschiedlicher Personen unter Berücksichtigung der Information über den Versender und den Transportempfänger aus den gespeicherten Begegnungsinformationen mittels eines von dem Transportanfragemodul (4) entfernten Berechnungsmoduls (5), wobei unmittelbar für in der Reihenfolge aufeinanderfolgende Personen eine Begegnungsinformationen vorhanden ist und wobei der Versender die erste Person in der Reihenfolge ist und wobei der Transportempfänger die letzte Person in der Reihenfolge ist, wobei jeweils an in der Reihenfolge jeweils unmittelbar aufeinanderfolgenden Personen und/oder an die Kommunikationsmodule (2) der in der Reihenfolge jeweils unmittelbar aufeinanderfolgenden Personen wenigstens eine Übergabeinformation übersendet wird, und
e. Durchführen des Transports des Gegenstandes in der Weise, dass der Versender den Gegenstand der zweiten Person der ermittelten Reihenfolge bei einer ohnehin anstehenden Begegnung übergibt und dass die zweite Person den Gegenstand bei einer ohnehin anstehenden Begegnung der dritten Person der ermittelten Reihenfolge übergibt und so fort, bis der Gegenstand den Transportempfänger erreicht hat.

9. Verfahren nach Anspruch 8, **dadurch gekennzeichnet, dass**
a. die Begegnungsinformation eine Information über den Zeitpunkt der Begegnung der wenigstens zwei Personen beinhaltet, und/oder dass
b. die Begegnungsinformation eine Information über eine Regelmäßigkeit künftiger Begegnungen der wenigstens zwei Personen beinhaltet, und/oder dass
c. die Begegnungsinformation keine Information über den Ort der Begegnung beinhaltet und/oder dass das Verfahren ohne Information über den Ort der Begegnungen durchführbar ist.

10. Verfahren nach Anspruch 8 oder 9, **dadurch gekennzeichnet, dass** das Transportanfragemodul (4), mittels dem die Transportanfrage eingegeben wird, eines der Kommunikationsmodule (2) der Vielzahl von Kommunikationsmodulen (2) ist.

11. Verfahren nach einem der Ansprüche 8 bis 10, **dadurch gekennzeichnet, dass**
a. über das Transportanfragemodul (4) wenigstens ein Transportparameter eingegeben wird und dass die Abfolge von Reihenfolge unter Berücksichtigung des Transportparameters ermittelt wird, und/oder dass
b. mehrere alternative Reihenfolgen ermittelt werden und/oder dass mehrere alternative Reihenfolgen, die durch unterschiedliche Transportparameter gekennzeichnet sind, ermittelt werden.

12. Verfahren nach Anspruch 11, **dadurch gekennzeichnet, dass**
a. ein Transportparameter das Ermitteln der Reihenfolge für den schnellsten Transport betrifft und/oder dass
b. ein Transportparameter das Ermitteln der Reihenfolge für den sichersten Transport betrifft und/oder dass
c. ein Transportparameter das Ermitteln der Reihenfolge mit den Personen betrifft, für die die besten Bewertungen durch andere Personen abgegeben wurden, und/oder dass
d. ein Transportparameter das Ermitteln der Reihenfolge mit der geringsten Anzahl von Personen betrifft, und/oder dass
e. ein Transportparameter das Ermitteln der Reihenfolge mit Personen mit einer für den zu transportierenden Gegenstand geeigneten Übergabe- und Transportkapazität betrifft.

13. Verfahren nach einem der Ansprüche 8 bis 12, **dadurch gekennzeichnet, dass**
a. die ermittelte Reihenfolge eine Transportdauer für den Transport vom Versender zum Transportempfänger ermittelt wird und die Transportdauer dem Versender mitteilt wird und/oder an das Transportanfragemodul (4) übermittelt wird, und/oder dass
b. die ermittelte Reihenfolge dem Versender mitteilt wird und/oder an das Transportanfragemodul (4) übermittelt wird, und/oder dass
c. die ermittelte Reihenfolge dem Versender mitteilt wird und/oder an das Transportanfragemodul (4) übermittelt wird, wobei die Identitäten der Personen der ermittelten Reihenfolge dem Versender mitteilt werden und/oder an das Kommunikationsmodul (2) übermittelt werden.

14. Verfahren nach einem der Ansprüche 8 bis 13, **dadurch gekennzeichnet, dass** der ermittelten Reihenfolge wenigstens eine Gegenstandsinformation über den zu transportierenden Gegenstand, die insbesondere einen Identifikationscode beinhaltet, zuordnet wird und an die Personen der ermittelten Reihenfolge versendet wird.

15. Verfahren nach einem der Ansprüche 8 bis 14, **dadurch gekennzeichnet, dass** im Falle einer Störung des Transportablaufs eine neue Abfolge, insbesondere automatisch, ermittelt wird.

## Claims

1. System (1) for the energy-saving transportation of objects, **characterized by**:
a. a plurality of communication modules (2), wherein each communication module (2) is unambiguously assigned to at least one person of a plurality of people, and wherein each communication module (2) is designed and configured for the inputting of at least one item of encounter information about a future encounter between at least two of the plurality of people,
b. a storage module (3), spatially separate from the communication modules (2), in which the encounter information input by way of the communication modules (2) is stored,
c. at least one transportation request module (4), into which a transportation request that contains at least information about a sender and a transport recipient is able to be input by a sender, and which sends the input transportation request,
d. a calculation module (5), separate from the transportation request module (4), which receives the transportation request from the communication module (2) and which determines a sequence of different people from the stored encounter information, taking into account the item of information about the sender and the transport recipient, wherein an item of encounter information is present for immediately consecutive people in the sequence and wherein the sender is the first person in the sequence and wherein the transport recipient is the last person in the sequence, and wherein the calculation module (5) in each case transmits at least one item of handover information to the communication modules (2) of the respectively immediately consecutive people in the sequence, and
e. wherein transportation of the object is able to be performed in such a manner that the sender transfers the object to the second person of the determined sequence during an encounter that is anyway scheduled and that the second person transfers the object during a encounter that is anyway scheduled to the third person of the determined sequence, and so on, until the object reaches the transport recipient.

2. System (1) according to Claim 1, **characterized in that**
a. the item of encounter information contains an item of information about the time of the encounter between the at least two people, and/or **in that**
b. the item of encounter information contains an item of information about the regularity of future encounters between the at least two people, and/or **in that**
c. the item of encounter information does not contain any information about the location of the encounter and/or **in that** the system is able to be operated without information about the location of the encounters.

3. System (1) according to Claim 1 or 2, **characterized in that**
a. the transportation request module (4) is one of the communication modules (2) of the plurality of communication modules (2), and/or **in that**
b. each of the communication modules (2) is also designed for the inputting of transportation requests.

4. System (1) according to one of Claims 1 to 3, **characterized in that**
a. at least one transportation parameter is able to be input via the transportation request module (4) and **in that** the calculation module determines the sequence taking into account the transportation parameter, and/or **in that**
b. the calculation module (5) determines a plurality of alternative sequences and/or determines a plurality of alternative sequences that are **characterized by** different transportation parameters.

5. System (1) according to Claim 4, **characterized in that**
a. a transportation parameter relates to the determination of the sequence for the quickest transportation, and/or **in that**
b. a transportation parameter relates to the determination of the sequence for the safest transportation, and/or **in that**
c. a transportation parameter relates to the determination of the sequence involving people to whom the best ratings have been given by other people, and/or **in that**
d. a transportation parameter relates to the determination of the sequence involving the lowest number of people, and/or **in that**
e. a transportation parameter relates to the determination of the sequence involving people having a transfer and transport capacity suitable for the object to be transported.

6. System (1) according to one of Claims 1 to 5, **characterized in that**
a. for the determined sequence, the calculation module (5) determines a transportation duration for the transportation from the sender to the transport recipient and communicates the transportation duration to the sender and/or transmits it to the transportation request module (4), and/or **in that**
b. the calculation module (5) takes into account the current whereabouts of the people of the plurality of people in the determination, and/or **in that**
c. the calculation module (5) communicates the determined sequence to the sender and/or transmits it to the transportation request module (4), and/or **in that**
d. the calculation module (5) communicates the determined sequence to the sender and/or transmits it to the transportation request module (4), wherein the identities of the people in the determined sequence are communicated to the sender and/or transmitted to the transportation request module (4), and/or **in that**
e. the calculation module (5) assigns the determined sequence at least one item of object information about the object to be transported, which item of object information in particular contains an identification code, and/or **in that**
f. the calculation module (5) determines a new sequence if the transportation progress is disrupted.

7. System (1) according to one of Claims 1 to 6, **characterized in that** the communication module (2) and/or the transportation request module (4) is a PC or a smartphone or a tablet PC or **in that** the communication module (2) and/or the transportation request module (4) contains a PC or a smartphone or a tablet PC.

8. Method for the energy-saving transportation of objects, **characterized by** the following steps:
a. inputting encounter information about the future encounters between in each case at least two of a plurality of people in a storage module, wherein inputting is performed by each of the people via a communication module (2) assigned to them,
b. transmitting the encounter information to a storage module (3), spatially separate from the communication modules (2), in which the encounter information input by way of the communication modules (2) is stored,
c. inputting a transportation request, which contains at least information about a sender and a transport recipient, into a transportation request module (4), which sends the input transportation request,
d. determining a sequence of different people from the stored encounter information, taking into account the item of information about the sender and the transport recipient, by way of a calculation module (5) separate from the transportation request module (4), wherein an item of encounter information is present for immediately consecutive people in the sequence and wherein the sender is the first person in the sequence and wherein the transport recipient is the last person in the sequence, wherein at least one item of handover information is in each case transmitted to the respectively immediately consecutive people in the sequence and/or to the communication modules (2) of the respectively immediately consecutive people in the sequence, and
e. performing transportation of the object in such a manner that the sender transfers the object to the second person of the determined sequence during an encounter that is anyway scheduled and that the second person transfers the object during an encounter that is anyway scheduled to the third person of the determined sequence, and so on, until the object reaches the transport recipient.

9. Method according to Claim 8, **characterized in that**
a. the item of encounter information contains an item of information about the time of the encounter between the at least two people, and/or **in that**
b. the item of encounter information contains an item of information about the regularity of future encounters between the at least two people, and/or **in that**
c. the item of encounter information does not contain any information about the location of the encounter and/or **in that** the method is able to be performed without information about the location of the encounters.

10. Method according to Claim 8 or 9, **characterized in that** the transportation request module (4), by way of which the transportation request is input, is one of the communication modules (2) of the plurality of communication modules (2).

11. Method according to one of Claims 8 to 10, **characterized in that**
a. at least one transportation parameter is input via the transportation request module (4) and **in that** the order of the sequence is determined taking into account the transportation parameter, and/or **in that**
b. a plurality of alternative sequences are determined and/or a plurality of alternative sequences that are **characterized by** different transportation parameters are determined.

12. Method according to Claim 11, **characterized in that**
a. a transportation parameter relates to the determination of the sequence for the quickest transportation, and/or **in that**
b. a transportation parameter relates to the determination of the sequence for the safest transportation, and/or **in that**
c. a transportation parameter relates to the determination of the sequence involving people to whom the best ratings have been given by other people, and/or **in that**
d. a transportation parameter relates to the determination of the sequence involving the lowest number of people, and/or **in that**
e. a transportation parameter relates to the determination of the sequence involving people having a transfer and transport capacity suitable for the object to be transported.

13. Method according to one of Claims 8 to 12, **characterized in that**
a. for the determined sequence, a transportation duration for the transportation from the sender to the transport recipient is determined and the transportation duration is communicated to the sender and/or is transmitted to the transportation request module (4), and/or **in that**
b. the determined sequence is communicated to the sender and/or is transmitted to the transportation request module (4), and/or **in that**
c. the determined sequence is communicated to the sender and/or is transmitted to the transportation request module (4), wherein the identities of the people in the determined sequence are communicated to the sender and/or are transmitted to the communication module (2).

14. Method according to one of Claims 8 to 13, **characterized in that** the determined sequence is assigned at least one item of object information about the object to be transported, which item of object information in particular contains an identification code, and is sent to the people in the determined sequence.

15. Method according to one of Claims 8 to 14, **characterized in that** a new order is determined, in particular automatically, if the transportation progress is disrupted.

## Revendications

1. Système (1) destiné au transport à faible consommation d'énergie d'objets, **caractérisé en ce qu'**il comprend:
a. une pluralité de modules de communication (2), chaque module de communication (2) étant attribué de manière univoque à au moins une personne d'une pluralité de personnes, et chaque module de communication (2) étant conçu et configuré pour la saisie d'au moins une information de rencontre concernant une rencontre future entre au moins deux personnes de ladite pluralité de personnes,
b. un module de stockage (3), spatialement séparé des modules de communication (2), dans lequel les informations de rencontre saisies au moyen des modules de communication (2) sont stockées,
c. au moins un module de demande de transport (4), dans lequel une demande de transport contenant au moins des informations concernant un expéditeur et un destinataire peut être saisie par l'expéditeur, et qui transmet la demande de transport saisie,
d. un module de calcul (5), séparé du module de demande de transport (4), qui reçoit la demande de transport provenant du module de communication (2) et qui détermine, à partir des informations de rencontre stockées, une séquence de personnes différentes en tenant compte des informations concernant l'expéditeur et le destinataire, une information de rencontre étant présente pour des personnes immédiatement consécutives dans la séquence, l'expéditeur constituant la première personne de la séquence et le destinataire constituant la dernière personne de la séquence, et le module de calcul (5) transmettant, dans chaque cas, au moins une information de remise aux modules de communication (2) des personnes respectivement immédiatement consécutives dans la séquence, et
e. le transport de l'objet pouvant être effectué de telle sorte que l'expéditeur remet l'objet à la deuxième personne de la séquence déterminée lors d'une rencontre qui a lieu de toute façon, et que la deuxième personne remet l'objet, lors d'une rencontre qui a lieu de toute façon, à la troisième personne de la séquence déterminée, et ainsi de suite, jusqu'à ce que l'objet atteigne le destinataire.

2. Système (1) selon la revendication 1, **caractérisé en ce que**
a. l'information de rencontre contient une information concernant le moment de la rencontre entre les au moins deux personnes, et/ou
b. l'information de rencontre contient une information concernant la régularité de rencontres futures entre les au moins deux personnes, et/ou
c. l'information de rencontre ne contient aucune information concernant le lieu de la rencontre et/ou le système est exploitable sans information concernant le lieu des rencontres.

3. Système (1) selon la revendication 1 ou 2, **caractérisé en ce que**
a. le module de demande de transport (4) est l'un des modules de communication (2) de la pluralité de modules de communication (2), et/ou
b. chacun des modules de communication (2) est également conçu pour la saisie de demandes de transport.

4. Système (1) selon l'une des revendications 1 à 3, **caractérisé en ce que**
a. au moins un paramètre de transport peut être saisi via le module de demande de transport (4) et le module de calcul détermine la séquence en tenant compte du paramètre de transport, et/ou
b. le module de calcul (5) détermine une pluralité de séquences alternatives et/ou détermine une pluralité de séquences alternatives **caractérisées par** des paramètres de transport différents.

5. Système (1) selon la revendication 4, **caractérisé en ce que**
a. un paramètre de transport concerne la détermination de la séquence pour le transport le plus rapide, et/ou
b. un paramètre de transport concerne la détermination de la séquence pour le transport le plus sûr, et/ou
c. un paramètre de transport concerne la détermination de la séquence impliquant des personnes ayant reçu les meilleures évaluations de la part d'autres personnes, et/ou
d. un paramètre de transport concerne la détermination de la séquence impliquant le plus petit nombre de personnes, et/ou
e. un paramètre de transport concerne la détermination de la séquence impliquant des personnes disposant d'une capacité de remise et de transport adaptée à l'objet à transporter.

6. Système (1) selon l'une des revendications 1 à 5, **caractérisé en ce que**
a. pour la séquence déterminée, le module de calcul (5) détermine une durée de transport pour le transport de l'expéditeur vers le destinataire et communique la durée de transport à l'expéditeur et/ou la transmet au module de demande de transport (4), et/ou
b. le module de calcul (5) tient compte de la position actuelle des personnes de la pluralité de personnes lors de la détermination, et/ou
c. le module de calcul (5) communique la séquence déterminée à l'expéditeur et/ou la transmet au module de demande de transport (4), et/ou
d. le module de calcul (5) communique la séquence déterminée à l'expéditeur et/ou la transmet au module de demande de transport (4), les identités des personnes de la séquence déterminée étant communiquées à l'expéditeur et/ou transmises au module de demande de transport (4), et/ou
e. le module de calcul (5) associe à la séquence déterminée au moins une information d'objet concernant l'objet à transporter, ladite information d'objet comprenant notamment un code d'identification, et/ou
f. le module de calcul (5) détermine une nouvelle séquence en cas de perturbation du déroulement du transport.

7. Système (1) selon l'une des revendications 1 à 6, **caractérisé en ce que** le module de communication (2) et/ou le module de demande de transport (4) est un ordinateur personnel, un smartphone ou une tablette, ou comprend un ordinateur personnel, un smartphone ou une tablette.

8. Procédé destiné au transport à faible consommation d'énergie d'objets, **caractérisé par** les étapes suivantes :
a. saisie d'informations de rencontre concernant des rencontres futures entre, dans chaque cas, au moins deux personnes d'une pluralité de personnes dans un module de stockage, la saisie étant effectuée par chacune des personnes au moyen d'un module de communication (2) qui lui est attribué,
b. transmission des informations de rencontre vers un module de stockage (3), spatialement séparé des modules de communication (2), dans lequel les informations de rencontre saisies au moyen des modules de communication (2) sont stockées,
c. saisie d'une demande de transport contenant au moins des informations concernant un expéditeur et un destinataire dans un module de demande de transport (4), lequel transmet la demande de transport saisie,
d. détermination d'une séquence de personnes différentes à partir des informations de rencontre stockées, en tenant compte des informations concernant l'expéditeur et le destinataire, au moyen d'un module de calcul (5) séparé du module de demande de transport (4), une information de rencontre étant présente pour des personnes immédiatement consécutives dans la séquence, l'expéditeur constituant la première personne de la séquence et le destinataire constituant la dernière personne de la séquence, au moins une information de remise étant transmise, dans chaque cas, aux personnes respectivement immédiatement consécutives dans la séquence et/ou aux modules de communication (2) des personnes respectivement immédiatement consécutives dans la séquence, et
e. réalisation du transport de l'objet de telle sorte que l'expéditeur remet l'objet à la deuxième personne de la séquence déterminée lors d'une rencontre qui a lieu de toute façon, et que la deuxième personne remet l'objet, lors d'une rencontre qui a lieu de toute façon, à la troisième personne de la séquence déterminée, et ainsi de suite, jusqu'à ce que l'objet atteigne le destinataire.

9. Procédé selon la revendication 8, **caractérisé en ce que** a. l'information de rencontre contient une information concernant le moment de la rencontre entre les au moins deux personnes, et/ou
b. l'information de rencontre contient une information concernant la régularité de rencontres futures entre les au moins deux personnes, et/ou
c. l'information de rencontre ne contient aucune information concernant le lieu de la rencontre et/ou le procédé peut être mis en œuvre sans information concernant le lieu des rencontres.

10. Procédé selon la revendication 8 ou 9, **caractérisé en ce que** le module de demande de transport (4), au moyen duquel la demande de transport est saisie, est l'un des modules de communication (2) de la pluralité de modules de communication (2).

11. Procédé selon l'une des revendications 8 à 10, **caractérisé en ce que**
a. au moins un paramètre de transport est saisi via le module de demande de transport (4) et l'ordre de la séquence est déterminé en tenant compte du paramètre de transport, et/ou
b. une pluralité de séquences alternatives est déterminée et/ou une pluralité de séquences alternatives **caractérisées par** des paramètres de transport différents est déterminée.

12. Procédé selon la revendication 11, **caractérisé en ce que**
a. un paramètre de transport concerne la détermination de la séquence pour le transport le plus rapide, et/ou
b. un paramètre de transport concerne la détermination de la séquence pour le transport le plus sûr, et/ou
c. un paramètre de transport concerne la détermination de la séquence impliquant des personnes ayant reçu les meilleures évaluations de la part d'autres personnes, et/ou
d. un paramètre de transport concerne la détermination de la séquence impliquant le plus petit nombre de personnes, et/ou
e. un paramètre de transport concerne la détermination de la séquence impliquant des personnes disposant d'une capacité de remise et de transport adaptée à l'objet à transporter.

13. Procédé selon l'une des revendications 8 à 12, **caractérisé en ce que**
a. pour la séquence déterminée, une durée de transport pour le transport de l'expéditeur vers le destinataire est déterminée et la durée de transport est communiquée à l'expéditeur et/ou transmise au module de demande de transport (4), et/ou
b. la séquence déterminée est communiquée à l'expéditeur et/ou transmise au module de demande de transport (4), et/ou
c. la séquence déterminée est communiquée à l'expéditeur et/ou transmise au module de demande de transport (4), les identités des personnes de la séquence déterminée étant communiquées à l'expéditeur et/ou transmises au module de communication (2).

14. Procédé selon l'une des revendications 8 à 13, **caractérisé en ce que** la séquence déterminée est associée à au moins une information d'objet concernant l'objet à transporter, ladite information d'objet comprenant notamment un code d'identification, et est envoyée aux personnes de la séquence déterminée.

15. Procédé selon l'une des revendications 8 à 14, **caractérisé en ce qu'**une nouvelle séquence est déterminée, notamment automatiquement, en cas de perturbation du déroulement du transport.
